(19) **Europäisches Patentamt**

**European Patent Office**

**Office européen des brevets**

(11) **EP 1 308 813 B1**

(12) **FASCICULE DE BREVET EUROPEEN**

(45) Date de publication et mention
de la délivrance du brevet:
**08.03.2006 Bulletin 2006/10**

(51) Int Cl.:
*G05D 1/08* (2006.01)   *B64G 1/32* (2006.01)

(21) Numéro de dépôt: **01402710.6**

(22) Date de dépôt: **19.10.2001**

(54) **Procédé de commande d'attitude d'un satellite en orbite terrestre basse**

Verfahren zur Lagesteuerung eines Satelliten auf einer niedrigen Umlaufbahn

Method of attitude control of a low earth orbit satellite

(84) Etats contractants désignés:
**AT BE CH CY DE DK ES FI FR GB GR IE IT LI LU MC NL PT SE TR**

(43) Date de publication de la demande:
**07.05.2003 Bulletin 2003/19**

(73) Titulaire: **EADS ASTRIUM SAS**
**31402 Toulouse Cedex 4 (FR)**

(72) Inventeur: **Laurens, Philippe**
**31520 Ramonville (FR)**

(74) Mandataire: **Loisel, Bertrand et al**
**Cabinet Plasseraud**
**65/67 rue de la Victoire**
**75440 Paris Cedex 09 (FR)**

(56) Documents cités:
**EP-A- 0 671 323**     **FR-A- 2 724 364**
**FR-A- 2 742 243**     **FR-A- 2 809 502**
**US-A- 5 957 410**

**Description**

La présente invention concerne les procédés de contrôle de l'attitude d'un satellite placé sur une orbite suffisamment basse pour que l'intensité du champ magnétique terrestre autorise une mesure d'attitude à l'aide d'un magnétomètre trois axes (c'est à dire fournissant une mesure de module et d'orientation dans un référentiel lié au satellite) et permette une commande de modification d'attitude par interaction de magnéto-coupleurs portés par le satellite avec le champ magnétique terrestre.

Pratiquement cette condition de mise en oeuvre est remplie lorsque le satellite est, sur au moins une partie de son orbite, à une altitude inférieure à 2000 kilomètres. L'invention trouve une application particulièrement importante, bien que non exclusive, sur les satellites de petites dimensions (classe 100 à 1000 kg) pour lesquels on cherche à réduire les coûts et les ressources requises du système de contrôle d'attitude et d'orbite, souvent désigné par l'acronyme SCAO.

On connaît déjà (demande de brevet FR 2 724 364) un procédé de commande d'attitude permettant de réduire les vitesses de rotation du satellite lorsqu'il est largué par son lanceur et d'orienter un axe lié au satellite suivant la normale au plan de son orbite. Suivant ce procédé, utilisant une loi dite "en B point" pour indiquer qu'elle fait intervenir la dérivée du champ magnétique terrestre B, on mesure le champ magnétique terrestre suivant les trois axes d'un référentiel lié au satellite, on dérive les mesures par rapport au temps, on multiplie les dérivées par un gain et on fait passer un courant représentatif du résultat dans des magnéto-coupleurs pour créer des moments magnétiques qui tendent à garder le satellite fixe par rapport aux lignes de force du champ magnétique terrestre. Ce procédé est simple. Il n'utilise que des capteurs fiables et peu coûteux et des actionneurs qui sont normalement employés sur tout satellite en orbite basse, c'est-à-dire des magnéto-coupleurs, en plus des roues cinétiques ou de réaction prévue dans tous les cas pour créer un moment cinétique interne au satellite. Il évite l'utilisation de tuyères de propulsion qui consomment des ergols et perturbent l'orbite ou de gyroscopes souvent coûteux et dont la fiabilité peut poser problème sur des missions de longue durée.

Ce procédé, ainsi que les autres procédés connus utilisant le pilotage magnétique, ne présente pas de caractéristiques permettant de répondre aux exigences des phases de transition à partir d'un état présentant de grands écarts et/ou de grandes dynamiques. Il doit faire appel à des phases spécifiques de transition généralement complexes, avec des contraintes opérationnelles, faisant éventuellement intervenir le sol, et des contraintes également sur les capteurs et/ou les actionneurs et sur les lois de contrôle utilisées.

La présente invention vise notamment à fournir un procédé et un dispositif permettant de réaliser de façon autonome au moins la transition entre des conditions dynamiques initiales quelconques, y compris avec de grands écarts angulaires initiaux et de grandes dynamiques, et un mode opérationnel par réduction des vitesses initiales, acquisition de l'attitude nominale et maintien en pointage trois axes approximatif autour de l'attitude nominale ; dans des applications particulières, notamment dans le cas de missions avec des besoins peu contraignants en performances de pointage (de l'ordre de 5° typiquement), elle vise à réaliser également le mode opérationnel nominal.

L'invention propose dans ce but un procédé suivant lequel, comme connu par FR 2 724 364,

- on créé, à l'aide d'au moins trois magnéto-coupleurs, un moment magnétique M, et qui de plus se caractérise en ce que ledit moment magnétique M est colinéaire à ce que serait une direction de consigne, constituée par la direction du champ géomagnétique en axes satellites (bo) si celui-ci était pointé de façon idéale, afin d'aligner de façon permanente la direction magnétique courante (b), et
- on contrôle la position angulaire autour de la direction magnétique courante instantanée (b) par utilisation d'un moment cinétique interne au satellite.

Une caractéristique remarquable du procédé de contrôle d'attitude suivant l'invention, qu'on peut qualifier de pilotage en « mode boussole », est l'utilisation d'un actionnement magnétique semi-passif, nécessitant uniquement des magnéto-coupleurs permettant une action suivant 3 axes, un magnétomètre également 3 axes, un modèle magnétique disponible à bord et une estimation initiale de la position du satellite dans un repère terrestre. La commande magnétique en mode boussole repose sur un pilotage quasiment en boucle ouverte, en créant, à l'aide des magnéto-coupleurs, un moment magnétique M égal, en notation vectorielle, à

$$M = K.bo$$

Le couple magnétique C ainsi généré est de la forme :

$$C = -K\, b \times bo$$

K étant un gain et b le champ magnétique réel dans la direction des lignes de force.

Le couple magnétique appliqué sur le satellite tend à orienter spontanément le moment magnétique fourni par les magnéto-coupleurs avec le champ terrestre local donc à provoquer un alignement passif de l'axe satellite correspondant sur son attitude de consigne par simple «effet boussole ». Il suffit donc de générer un moment magnétique de bord théorique, élaboré à partir d'un modèle de direction magnétique de bord et d'une estimation faite à bord de la position du satellite par rapport à un repère terrestre de référence.

On peut ainsi faire passer le satellite d'un état dynamique quelconque et éventuellement perturbé (après séparation du lanceur ou en mode survie par exemple) à un état proche des conditions opérationnelles nominales ou même correspondant à ces conditions lorsqu'elles acceptent des tolérances.

La loi générant, à bord du satellite, la direction de consigne bo en fonction du temps équivaut à une loi de guidage. Il est ainsi possible de faire suivre au satellite une consigne quelconque prédéterminée qui peut notamment être de pointage géocentrique, de pointage solaire ou inertielle ; il est également possible de commander des manoeuvres de rotation autour de la direction normale au champ géomagnétique local et notamment des basculements en tangage en cas d'orbites polaires ou fortement inclinées sur l'équateur.

Il sera cependant surtout question par la suite d'une mission géocentrique pour laquelle le pilotage en mode boussole permet de réaliser de façon intégrée les opérations successives suivantes :

- réduction des vitesses initiales
- acquisition du pointage vers la Terre
- maintien convergé du pointage géocentrique avec des performances de quelques degrés selon les trois axes.

L'effet boussole permet de réaliser les opérations de commande de façon autonome au cours des trois phases successives ci-dessus, qui sont réellement. intégrées au sein d'un mode de contrôle d'attitude et d'orbite unique, en ce sens que leur enchaînement ne nécessite aucun séquencement d'opérations à bord et aucune commutation manuelle ou automatique d'équipements ou de lois de contrôle.

La loi de contrôle par « effet boussole » se comporte comme une raideur pure. On lui associe un terme d'amortissement. Une solution avantageuse, qui garantit par construction l'apport d'un effet dissipatif, consiste à créer un moment magnétique M de valeur vectorielle :

$$M = -\,D\,(\dot{b} - \dot{bo})$$

où D est une constante, éventuellement ajustable.

La détermination de cette partie de la commande et sa génération par les magnéto-coupleurs nécessitent de disposer à bord d'une mesure de la direction magnétique instantanée du vecteur bo. Le pilotage requiert alors l'emport d'un magnétomètre trois axes.

En regroupant les termes de raideur magnétique (par effet boussole) et d'amortissement (qu'on peut rapprocher d'une commande en « B point » tournant), la consigne totale M à appliquer peut s'écrire, en fonction de la mesure b de la direction magnétique locale, faite par un magnétomètre 3 axes, et du modèle mémorisé à bord bo, après normalisation de M par le module du champ local B :

$$M = [\,Kbo + D\,(\dot{bo} - \dot{b})\,]\,/\,B$$

Mais en fait il est inutile de générer la partie de la consigne qui est colinéaire au champ magnétique local mesuré. On aboutit donc finalement à une élaboration de 1a consigne de moment magnétique M en deux étapes, de 1a forme :

$$Mo = [\,Kbo + D(\dot{bo} - \dot{b})\,]\,/\,B$$

$$M = Mo - (Mo.b).b$$

Le pilotage par effet boussole, même avec introduction d'un terme d'amortissement, ne permet que d'aligner la direction magnétique de consigne, c'est à dire le vecteur bo, avec la direction de la direction magnétique réelle courante b. Or, il est en général nécessaire de contrôler l'attitude du satellite autour de trois axes, donc de contrôler également l'angle de rotation autour de la direction du vecteur b.

Pour cela on peut notamment utiliser l'effet gyroscopique inertiel créé par un moment cinétique à bord du satellite, généré par au moins une roue de réaction et/ou une roue cinétique.

La capacité des magnéto-coupleurs est limitée dans la pratique à une valeur Mmax et il n'est en conséquence pas toujours possible de réaliser la commande souhaitée. Pour obtenir la commande finale en cas de saturation des magnéto-coupleurs, une approche consiste à normaliser la commande vectorielle M par un rapport approprié de façon à conserver la direction de consigne correcte en respectant la limite imposée.

De façon synthétique la commande des magnéto-coupleurs en mode boussole sera alors telle que le vecteur Mi représentant la commande projetée et le vecteur Ms substitué à la commande brute Mo (en l'absence de saturation) soient obtenus par l'algorithme défini par les équations suivantes :

$$Mo = [Kbo + D(\dot{bo} - \dot{b})] / B$$

$$Mi = Mo - (Mo.b).b$$

$$Ms = Mi / MAX\left\{1, \frac{Mi_x}{Mmax}, \frac{Mi_y}{Mmax}, \frac{Mi_z}{Mmax}\right\}$$

Comme indiqué plus haut, le mode de pilotage défini par l'algorithme ci-dessus ne permet que d'aligner de façon permanente la direction magnétique de consigne bo sur la dircection magnétique courante du champ magnétique extérieur. L'angle d'orientation autour de la direction b n'est pas contrôlé. Divers procédés peuvent être utilisés pour ce dernier contrôle. Une solution avantageuse consiste à utiliser le couple gyroscopique créé par un moment cinétique embarqué (généré par une roue cinétique ou une roue de réaction).

Les caractéristiques ci-dessus, ainsi que d'autres, apparaîtront mieux à la lecture de la description qui suit de modes particuliers de réalisation, donnés à titre d'exemples non limitatifs. La description se réfère aux dessins qui l'accompagnent, dans lesquels :

- la figure 1 est un schéma montrant une disposition possible du satellite par rapport au champ terrestre dans le cas d'une orbite polaire ;
- la figure 2 est un schéma synoptique destiné à faire apparaître les commandes requises ;
- la figure 3 montre un profil de convergence correspondant à un cas représentatif.

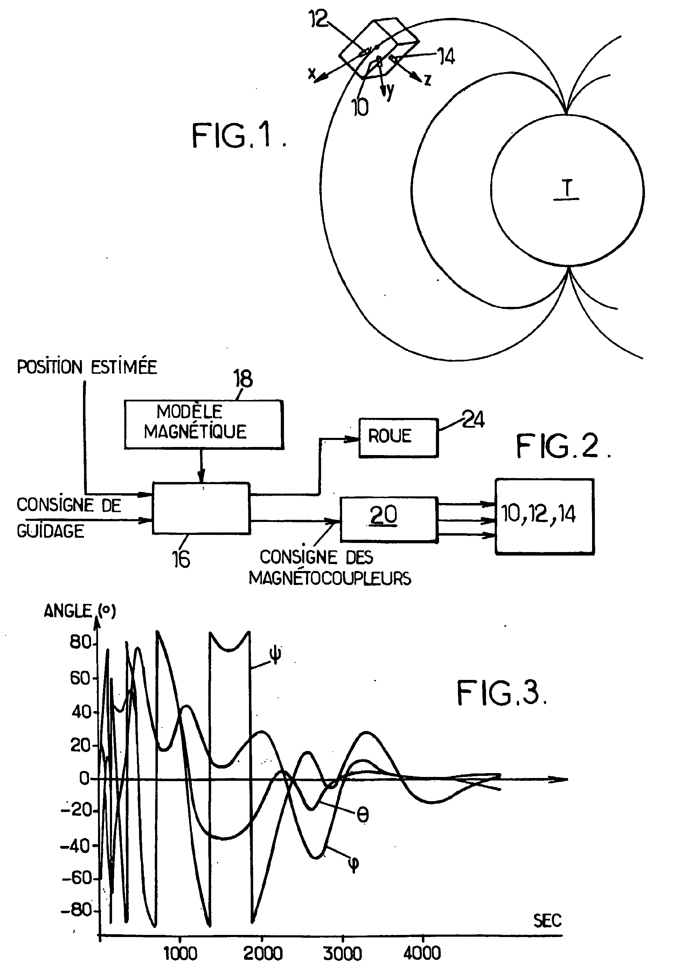

Pour simplifier, on considérera le cas d'une orbite polaire basse, illustré en figure 1. En première approximation, les lignes de force du champ géomagnétique se trouvent alors dans le plan de l'orbite. On peut définir un axe de roulis x, un axe de tangage y et un axe de lacet z constituant un trièdre orthonormé lié au satellite, ainsi que des angles de roulis $\varphi$, de tangage $\theta$ et de lacet $\psi$, définis respectivement comme les erreurs d'orientation autour de la direction du vecteur vitesse instantanée, autour de la direction normale au plan orbital et autour de la direction du satellite pointant vers la Terre.

Le contrôle d'attitude par orientation suivant deux axes par amenée d'un champ magnétique de consigne généré à bord avec la direction du champ magnétique réel courant se fait par mise en oeuvre de trois magnéto-coupleurs 10, 12 et 14 qui sont par exemple disposés le long des axes de roulis, de tangage et de lacet. Les courants à fournir aux magnéto-coupleurs sont calculés par un calculateur de bord 16 qui comporte une mémoire contenant un modèle magnétique de bord 18 et fournit des valeurs de consigne à une source de courants 20. Le calculateur commande également la vitesse d'une roue cinétique ou de réaction 24 qui est disposée autrement que dans le plan des axes x et z, généralement suivant l'axe y.

Le mode de calcul met en oeuvre les algorithmes définis plus haut. L'attitude n'étant pas contrôlable autour de la direction magnétique par les magnéto-coupleurs cette direction est couplée par le moment cinétique de la roue avec une autre direction contrôlable, avantageusement selon la direction normale au plan de l'orbite, c'est à dire selon l'axe de tangage y. L'introduction du moment cinétique complète l'action de la loi de pilotage magnétique. Les trois axes sont ainsi stabilisés.

Le système avec pilotage magnétique et moment cinétique possède deux états d'équilibre, l'un avec le moment cinétique de la roue 24 aligné sur +y, (c'est à dire de sens opposé à la vitesse orbitale) l'autre avec le moment cinétique de la roue aligné sur —y (c'est-à-dire de même sens que la vitesse orbitale). Mais l'étude analytique démontre que seul le second de ces états d'équilibre est stable. Le système, partant d'un état dynamique quelconque, c'est à dire quels que soient les angles et les vitesses angulaires, convergera donc sans ambiguïté vers l'état d'équilibre stable unique où le moment cinétique de la roue est aligné avec -y.

La figure 3 montre un exemple de profil temporel de convergence du « mode boussole » à partir de conditions initiales très perturbées, avec variation temporelle rapide des angles d'Euler. Sur la figure 3, les courbes sont tronquées en fin de phase d'acquisition, alors que le régime n'est pas encore stationnaire mais suffisent à montrer qu'au bout de 500 sec on a atteint un pointage vers la Terre meilleur que 10˚ à partir d'un dépointage initial de 90˚.

Les performances du mode boussole peuvent être évaluées à partir de deux types d'indicateurs, les performances de pointage en régime convergé (par exemple valeurs de pic et valeurs RMS (erreur quadratique moyenne) sur les trois angles d'Euler $\varphi$, $\theta$ et $\psi$ et l'indicateur de performances de la phase initiale d'acquisition d'attitude.

Pour ce qui est du premier indicateur, le taux d'utilisation des magnéto-coupleurs tous axes confondus peut être un chiffre représentatif. Pour ce qui est du second, l'indicateur de performance de l'acquisition (acquisition Terre dans le cas d'une mission géocentrique) peut se définir par le temps de convergence à mieux qu'une valeur prédéterminée (10 degrés par exemple), c'est à dire par le temps au delà duquel les trois angles d'Euler ne repassent plus au delà de 10 degrés.

Le niveau des performances dépend d'un grand nombre de facteurs tels que :

- facteurs dynamiques : conditions initiales et moments d'inertie du satellite,
- capacité des actionneurs : capacité des magnéto-coupleurs et moment cinétique de la roue,
- précision de mesure du magnétomètre et perturbations magnétiques internes,
- précision du modèle magnétique mémorisé à bord et précision de la connaissance de la position du satellite en repère Terre,
- environnement : couples perturbateurs (aérodynamique, gradient de gravité, magnétique, etc.),
- inclinaison dé l'orbite,

Dans les conditions actuelles, la meilleure performance de pointage en phase convergée (tous effets cumulés) devrait être de l'ordre de 5˚ sur les trais angles d'Euler. Lorsqu'une telle performance est compatible avec les exigences opérationnelles de la charge utile le « mode boussole » peut titre utilisé comme mode nominal aussi bien que comme mode de transition entre l'acquisition initiale après lancement (ou éventuellement séjour en mode survie) et le mode nominal.

Le mode boussole fournit une réponse intégrée et d'une grande simplicité dans l'enchaînement :
acquisition ou survie → acquisition Terre → pointage trois axes grossier → mode normal.

En mode de transition les phases sont réellement « intégrées » au sein d'un mode de contrôle d'attitude et d'orbite unique. En mode normal la simplicité et le faible besoin en ressources de bord le rendent intéressant pour un système simple, robuste et de faibles consommation et coût. Le pilotage magnétique avec stabilisation par effet gyroscopique obtenue à l'aide d'une roue rend inutile une détermination d'attitude explicite. Le contrôle se tait en quasi boucle ouverte par interaction magnétique entre commande des magnéto-coupleurs et champ géomagnétique local. On n'a besoin ni de capteurs d'attitude tel que gyroscopes, capteurs de Terre, d'étoiles, ou de soleil) ni d' algorithme de restitution. Les seuls capteurs et actionneurs requis sont le magnétomètre trois axes, trois magnéto-coupleurs et une roue cinétique ou de réaction pouvant être pilotée à vitesse fixe. L'utilisation des ressources de bord est donc minimale, en particulier en termes de puissance consommée, compatible de phases de fonctionnement total ou partiel sur batteries.

De plus, le mode boussole est d'une grande simplicité fonctionnelle puisque son seul besoin externe est d'avoir une estimée de la position satellite dans un repère lié à la Terre et opérationnelle puisqu'il ne requiert aucune intervention du sol : l'acquisition et le pointage convergé sont réalisés de façon totalement autonome à bord.

Certaines manoeuvres d'attitude sont possibles de façon intégrée et naturelle en mode boussole par basculements autour de l'axe du moment cinétique. Par exemple, en orbite inclinée avec pointage géocentrique, un basculement en tangage est simple et peut se faire soit de façon purement magnétique en jouant sur la loi de guidage donnée par le vecteur magnétique de consigne bo, soit en modulant la vitesse de la roue autour de sa valeur nominale.

Le satellite prévu pour un fonctionnement en mode boussole sera généralement équipé également de tuyères. Des poussées par tuyère de faible amplitude et de courte durée peuvent être réalisées en phase pilotée par le mode boussole. Les poussées sont commandées en boucle ouverte. Les perturbations éventuellement générées par les mésalignements des poussées de tuyère se traduisent par une excitation de la nutation du satellite, qui est rapidement récupérée et amortie par les lois magnétiques. La durée maximum admissible des poussées est choisie en fonction des poussées par tuyères, des bras de levier, des mésalignements résiduels et des contraintes de pointage de la mission.

**Revendications**

1.    Procédé de contrôle de l'attitude d'un satellite placé sur une orbite terrestre basse suivant lequel :

      - on crée, à l'aide d'au moins trois magnéto-coupleurs (10, 12, 14) un moment magnétique M, **caractérisé en ce que** ledit moment magnétique M est colinéaire à ce que serait une direction de consigne, constituée par la direction du champ géomagnétique en axes satellites (bo) si celui-ci était pointé de façon idéale, afin d'aligner de façon permanente la direction magnétique de consigne (bo) sur la direction magnétique courante (b), et
      - on contrôle la position angulaire autour de la direction magnétique courante instantanée (b) par un moment cinétique (24).

2.    Procédé suivant la revendication 1, **caractérisé en ce qu'**on associe à la commande un terme d'amortissement en créant un moment magnétique Mo total de valeur vectorielle :

$$\mathrm{Mo= [Kbo+D\,(\dot{bo}-\dot{b}\,)]/B}$$ où K et D sont des gains, b est le champ magnétique terrestre réel local et B est le module de ce champ.

3.    Procédé suivant la revendication 2, **caractérisé en ce qu'**on génère uniquement la partie de la consigne qui n'est pas colinéaire au champ magnétique local mesuré.

4.    Procédé selon la revendication 3, **caractérisé en ce que** l'on génère uniquement une partie M donnée par : M=Mo-(Mo.b)b.

5.    Procédé suivant l'une quelconque des revendications 1 à 4, **caractérisé en ce que** les courants (20) dans les magnéto-coupleurs (10, 12, 14) sont commandés simultanément pour maintenir la direction du champ magnétique résultant en cas de saturation de l'un d'entre eux.

6.    Procédé suivant l'une quelconque des revendications précédentes, **caractérisé en ce qu'**on génère le moment cinétique par une roue (24) cinétique ou de réaction placée suivant l'axe de tangage (y) du satellite.

7.    Procédé suivant l'une quelconque des revendications précédentes, **caractérisé en ce que** le satellite est muni d'un magnétomètre trois axes et de trois magnéto-coupleurs (10, 12, 14) disposés suivant les axes de roulis (x) de tangage (y) et de lacet (z).

**Patentansprüche**

1.    Verfahren zur Steuerung/Regelung der Lage eines auf einer tiefen Erdumlaufbahn platzierten Satelliten, bei dem:

      - vermittels wenigstens dreier Magnetmomenterzeuger (10, 12, 14) ein magnetisches Moment M erzeugt wird, **dadurch gekennzeichnet, dass** das magnetische Moment M kolinear zu einer Einstellrichtung ist, welche durch die Richtung des geomagnetischen Feldes in den Satellitenachsen (bo) gebildet ist, wenn dieses Moment in idealer Weise ausgerichtet ist, um die magnetische Einstellrichtung (bo) in permanenter Weise auf die laufende magnetische Richtung (b) auszurichten, und
      - die Winkelposition um die augenblickliche laufende magnetische Richtung (b) durch einen Drall (24) gesteuert/geregelt wird.

**2.** Verfahren nach Anspruch 1, **dadurch gekennzeichnet, dass** dem Steuerbefehl ein Dämpfungsterm zugewiesen wird, indem ein totales magnetisches Moment Mo erzeugt wird mit dem vektoriellen Wert:

wobei K Mo=[$Kbo$+D($\dot{bo}$-$\dot{b}$)]/$B$ und D Verstärkungen sind, b das lokale reale terrestrische Magnetfeld ist, und B der Modul dieses Felds ist.,

**3.** Verfahren nach Anspruch 2, **dadurch gekennzeichnet, dass** nur der nicht mit dem gemessenen lokalen Magnetfeld kolineare Teil des Einstellwerts erzeugt wird.

**4.** Verfahren nach Anspruch 3, **dadurch gekennzeichnet, dass** nur ein Teil M erzeugt wird, der gegeben ist durch:

$$M = Mo - (Mo.b)b.$$

**5.** Verfahren nach einem der Ansprüche 1 bis 4, **dadurch gekennzeichnet, dass** die Ströme (20) in den Magnetmomenterzeugern (10, 12, 14) gleichzeitig angesteuert werden, um die Richtung des Magnetfeldes beizubehalten, die sich im Falle der Sättigung von einem unter ihnen ergibt.

**6.** Verfahren nach einem der vorhergehenden Ansprüche, **dadurch gekennzeichnet, dass** der Drall durch ein kinetisches Rad (24) oder ein Reaktionsrad erzeugt wird, welches entlang der Nickachse (y) des Satelliten platziert ist.

**7.** Verfahren nach einem der vorhergehenden Ansprüche, **dadurch gekennzeichnet, dass** der Satellit mit einem Magnetometer, das drei Achsen aufweist, und mit drei Magnetmomenterzeugern (10, 12, 14) ausgerüstet ist, die entlang der Rollachse (x), der Nickachse (y) und der Schlingerachse (z) angeordnet sind.

**Claims**

**1.** Method of controlling the attitude of a satellite placed on a low earth orbit, according to which:

- a magnetic moment M is created with the aid of at least three magnetic torquers (10, 12, 14), **characterised in that** said magnetic moment M is co-linear with what would be a reference direction, constituted by the direction of the geomagnetic field with respect to satellite axes (bo) if the latter were ideally pointed, in order permanently to align the reference magnetic direction (bo) with the current magnetic direction (b), and
- the angular position is controlled around the instantaneous current magnetic direction (b) by an angular momentum (24).

**2.** Method according to claim 1, **characterised in that** a damping term is associated with the control law by creating a total magnetic moment Mo of vectorial value:

$$Mo = [Kbo+D(\dot{b}o-\dot{b})]/B$$

where K and D are gains, b is the actual local terrestrial magnetic field and B is the modulus of that field.

**3.** Method according to claim 2, **characterised in that** only the part of the reference direction that is not co-linear with the measured local magnetic field is generated.

**4.** Method according to claim 3, **characterised in that** only a part M given by: M = Mo-(Mo.b)b is generated.

**5.** Method according to any one of claims 1 to 4, **characterised in that** the currents (20) in the magnetic-troquers (10, 12, 14) are controlled simultaneously in order to maintain the direction of the resulting magnetic field in case of saturation of one of them.

**6.** Method according to any one of the preceding claims, **characterised in that** the angular momentum is generated by a momentum or reaction wheel (24) positioned according to the pitch axis (y) of the satellite.

7. Method according to any one of the preceding claims, **characterised in that** the satellite is equipped with a three-axis magnetometer and with three magnetic torquers (10, 12, 14) arranged in accordance with the roll-axis (x), the pitch axis (y) and the yaw axis (z).

FIG.1.

POSITION ESTIMÉE

MODÈLE MAGNÉTIQUE — 18

ROUE — 24

FIG.2.

CONSIGNE DE GUIDAGE

16

CONSIGNE DES MAGNÉTOCOUPLEURS

20

10,12,14

ANGLE (°)

FIG.3.

SEC

1000   2000   3000   4000